# EUROPEAN PATENT SPECIFICATION

(11) **EP 1 289 380 B1**
(45) Date of publication and mention of the grant of the patent: **06.09.2006**
(21) Application number: 01947286.9
(22) Date of filing: 16.05.2001
(51) Int. Cl.: A23L 1/03

(54) **NON-VIABLE LACTOBACILLUS CONTAINING FOOD PRODUCT**
NICHT-LEBENSFÄHIGEN LACTOBACILLUS ENTHALTENDES LEBENSMITTELPRODUKT
PRODUIT ALIMENTAIRE CONTENANT DU LACTOBACILLE NON-VIABLE

(30) Priority: 13.06.2000 EP 00202072
(43) Date of publication of application: 12.03.2003
(73) Proprietor: UNILEVER N.V., 3013 AL Rotterdam (NL); UNILEVER PLC, London EC4P 4BQ (GB)
(72) Inventor: VERRIPS, Cornelis T., 3994 ZP Houten (NL)
(74) Representative: Wurfbain, Gilles L.
(86) International application number: PCT/EP2001/005619
(87) International publication number: WO 2001/095741

(56) References cited:
- EP-A- 0 166 238
- EP-A- 0 416 892
- EP-A- 0 868 850
- WO-A-94/00019
- WO-A-98/06411
- US-A- 3 794 739
- US-A- 5 186 962
- FREY J P ET AL: "Heat- and freeze-shocking cause changes in peptides and protease activity of Lactobacillus helveticus." MILCHWISSENSCHAFT 1986 DEP. OF FOOD SCI., UNIV. OF WICONSIN-MADISON, MADISON, WISCONSIN 53706, USA, vol. 41, no. 11, pages 681-685, XP002153275
- GILLILAND ET AL.: "Bacterial Starter Cultures for Foods" 1985 , CRC PRESS , BOCA RATON, US XP002153276 001325 page 152 -page 155
- OUWEHAND A C ET AL: "THE HEALTH EFFECTS OF CULTURED MILK PRODUCTS WITH VARIABLE AND NON-VIABLE BACTERIA" INTERNATIONAL DAIRY JOURNAL,ELSEVIER APPLIED SCIENCE, BARKING,,GB, vol. 8, no. 9, 1998, pages 749-758, XP000952256 ISSN: 0958-6946 cited in the application
- MILCHWISSENSCHAFT, vol. 42, no. 3, 1987,

## Description

### Field of Invention

The present invention relates to food products comprising Lactobacillus. In particular the invention relates to a method to prepare food products comprising Lactobacillus and the use of these products for promoting the health of human beings.

### Background of the invention

Lactobacilli are well-known bacteria applied in the production of food products. For example yogurt is normally made by fermenting milk with among others a Lactobacillus strain. The fermented acidified product, still containing the viable Lactobacillus, is then cooled and consumed at the desired moment.

Another application of Lactobacillus in food products is in the production of meat products for example sausages. Here the Lactobacillus is added to the meat mass prior to applying the casing, followed by a period of ripening in which the fermentation process takes place.

Still another application of Lactobacillus in the production of food products is the brining of vegetables such as cabbage (sauerkraut), carrots, olives or beets. Here the natural fermentation process can be controlled by the addition of an appropriate Lactobacillus starter culture.

The application of Lactobacillus in food products is often associated with several health effects, see for example A.C. Ouwehand et al. in Int. Dairy Journal 8 (1998) 749-758. In particular the application of probiotics is associated with several health effects for example relating to gut well being such as IBS (Irritable Bowel Syndrome), reduction of lactose maldigestion, clinical symptoms of diarrhea, immune stimulation, anti-tumor activity and enhancement of mineral uptake.

US 5,186,962 describes a method of inhibiting the growth of a food spoilage or pathogenic organism in a food mixture, comprising combining an edible food substance, that is fermentable by lactic acid bacteria, and a population of living, i.e. viable bacteriocin-producing lactic acid bacterial cells to produce the food mixture. The viable lactic acid bacterial cells have been modified to render them incapable of significantly fermenting the edible food substance. Alternative methods of inhibiting the growth of a food spoilage or pathogenic organism described in the same US patent also make use of viable bacteriocin-producing lactic acid bacterial cells.

EP-A 0 416 892 describes pharmaceutical compositions and feed additives that can be used to prevent and treat diarrhoea and which comprise either separately or in combination i) killed bacterial cells; ii) a homogenate of bacterial cells and/or iii) a fraction containing a component of the bacterial cell wall. The bacterial cells are said to belong to one or more of the genera Bacillus, *Brevibacterium, Corynebacterium, Escherichia, Lactobacillus, Streptococcus* and *Streptomyces*. The European patent application effectively teaches to employ non-viable bacterial cells or fractions thereof.

Milchwissenschaft (1986) 41(11), pages 681-685 describe the results of a study in which the effect of heat- and freeze-shocking on peptidase and protease activity of *Lactobacillus helveticus* was investigated. The heat- and freeze-shocking treatments described in the article do not render the bacteria cells non-viable.

EP-A 0 166 238 relates to a process for producing a *Lactobacillus* beverage, which process comprises adding a viable lactobacillus micro-organism to a treated fruit juice.

WO 98/06411 describes the use of both alive and inactivated Lactobacillus in an oral rehydrating solution.

WO 94/00019 describes the addition of viable lactic acid bacteria to baked products.

US 3794739 discloses the use of lactic acid producing cells in foods.

There are several possible problems associated with the use of viable Lactobacillus, in particular probiotics in food products.

A possible first problem is that many consumers do not appreciate the taste of food product when fermented. For example often consumers find yoghurt too acid and/or do not like the taste of other fermented food products.

A possible further problem especially related to the use of probiotics is that probiotics have been associated with many health effects, while sometimes there is a need to have a substance which selectively addresses only a limited number of health effects. For example for some consumers there may be a need to use a substance to reduce the symptoms of diarrhea while there is no desire to ingest substances with anti-tumor activity. The belief is that probiotics are less suitable to give this desired selectivity.

Another possible problem in the use of viable Lactobacillus in food products is that they are expensive to prepare and that the method of storing the viable Lactobacillus and the subsequent processing into the food is complicated and hence further enhances the costs of the food products.

A possible further problem with the use of viable Lactobacillus in food products it that the formulation of the product often needs to be adapted to ensure that the viable character of the Lactobacillus can be maintained. This limits the formulation flexibility e.g. low or high pH values may not be suitable, high mineral contents may not be possible and the product sometimes may need a minimum water activity.

Another possible problem with the use of viable Lactobacillus in food products is that often the products will require storage at relative low temperatures to ensure that the fermentation process will not proceed beyond a certain level. If the fermentation process proceeds this may lead to products which are either too acid or which have unwanted structures due to so-called post-acidification.

Furthermore the use of viable Lactobacillus in food products sometimes prevents the pasteurization or other heat treatment thereof. This again may limit the shelflife of the products and/or may require expensive storing or packaging conditions. Furthermore the need to avoid heat treatments may limit the type of food products in which the Lactobacillus are to be incorporated.

Another problem with the use of viable Lactobacillus on food products is that because of the fact that they still ferment there is an upper limit to the number of Lactobacillus cells that can be applied in the food product.

The present invention aims at solving one or more of the above problems by providing a novel method to produce food products containing Lactobacillus.

Accordingly the present invention relates to a method to produce a food product, wherein the method comprises the addition of a mixture of usable and non-viable Lactobacillus bacteria followed by rendering viable bacteria non-viable and wherein the ratio of non-viable to viable bacteria is more than 2:1, and further wherein the food product exhibits no more than 0.1 pH unit post-acidification.

In accordance with the invention the addition of viable Lactobacillus into the food product is followed by inactivation (for example by a heat-treatment or the pH of the product) of the viable Lactobacillus before substantial fermentation of the food product by said Lactobacillus can take place.

### Detailed description of the invention

For the purpose of this invention the following definitions will be applied

Viable Lactobacillus bacteria are Lactobacillus bacteria, which are capable of growing under the appropriate growing conditions of, said Lactobacillus strain.

Non-viable Lactobacillus bacteria are Lactobacillus bacteria of which substantially all or all bacteria are not capable of growing under the appropriate growing conditions of said Lactobacillus strain.

Appropriate growing conditions for a Lactobacillus strain refer to a combination of pH, medium and temperature where normally a diluted version of said strain in viable form (say about 10⁶ bacteria per gram) would grow to a density of at least 10⁷ bacteria per gram within a normal period of growth.

Probiotics are defined as viable microbial food supplements which beneficially influence the host by improving its intestinal microbial balance in accordance to Fuller (1989) probiotics in man and animals, Journal of Applied Bacteriology 66, 365-378.

Health active non-viable Lactobacillus bacteria are probiotics which have been rendered non-viable.

No substantial fermentation by said Lactobacillus can for example be evidenced by the substantial absence of post-acidification, whereby post-acidification occurs when the pH is lowered by at least 0.1 pH unit. For the purpose of the invention the occurance of post-acidefication due to the presence of Lactobacillus is generally seen as evidence of the occurence of fermentation by said Lactobacillus.

As described above the present invention relates to a method whereby food products are produced which contain non-viable Lactobacillus bacteria.

For the purpose of the invention any edible Lactobacillus may be used for example Lactobacillus casei, Lactobacillus paracasei, Lactobacillus rhamnosus, Lactobacillus salivarius, Lactobacillus delbrueckii subsp. bulgaricus, Lactobacillus sanfranciscus, Lactobacillus brevis, Lactobacillus plantarum, Lactobacillus sake and Lactobacillus reuteri especially preferred is the use of Health active non-viable Lactobacillus bacteria for example non-viable version of Lactobacillus casei strain DN-114001, Lactobacillus reuteri, Lactobacillus acidophilus NCFB 1748, Lactobacillus rhamnosus VTT E-97800, Lactobacillus rhamnosus 272, Lactobacillus casei strain Shirota, Lactobacillus casei GG, Lactobacillus plantarum 299v and Lactobacillus salivarious UCC188.

Advantageously the amount of non-viable Lactobacillus bacteria in food products of the invention is between 10⁶ and 10¹¹ per serving or (for example if serving size is not known) between 10⁶ and 10¹¹ per 100 g of product, more preferred these levels are from 10⁷ to 10¹⁰ per serving (or 100 g of product)-, most preferred 10⁸ to 10⁹ per serving or per 100 g of product.

Several food products may be prepared according to the invention, for example meal replacers, soups, noodles, ice-cream, sauces, dressing, spreads, snacks, cereals, beverages, bread, biscuits, other bakery products, sweets, bars, chocolate, chewing gum, dairy products, dietetic products e.g. slimming products or meal replacers etc. For some applications food products of the invention may also be dietary supplements, although the application in food products of the above type is preferred.

Table 1 indicates a number of products, which may be prepared according to the invention, and a typical serving size.

**Table 1**

| **Product** | **Serving size** |
|---|---|
| margarine | 15 g |
| ice-cream | 150 g |
| dressing | 30 g |
| sweet | 10 g |
| bar | 75 g |
| meal replacer drink | 330 ml |
| Beverages | 200 |

The method according to the invention is especially suitable to prepare food products, which have a pH at which Lactobacillus are normally not stable.

In particular the invention can very advantageously be used for the preparation of food products having a pH of 3.8 or less, for example from 3.8 to 2.0, more preferred 3.5 to ' 2.5, most preferred 3.3 to 3.0. Examples of such products are beverages, for example some softdrinks e.g. of the cola type or fruit juices or fruit based drinks such as lemon or orange juice. Accordingly in another aspect the present invention relates to a food product having a pH of 3.8 or less said food product comprising non-viable Lactobacillus bacteria and said food product being substantially non-fermented by said Lactobacillus bacteria.

Alternatively the invention can advantageously be used for the preparation of food products having a pH of 5.0 or more, for example from 5.0 to 10.0, more preferred 5.1 to 8.0, most preferred 5.2 to 7.0. Examples of such products are for example sauces, milk, margarines, bakery products, meal replacers, ice-cream etc.

The method of preparation in accordance to the invention preferably involves a heat-treatment either as a step to prepare the food product (e.g. cooking, steaming, baking etc) or for preservation of the product (e.g. pasteurisation or sterilisation). Said heat-treatment may advantageously be used to inactivate any Lactobacillus bacteria that may have been added in viable form. Preferably the heat-treatment should not fully denature the Lactobacillus strain, such that the individual bacteria are still recognisable as such.

Another advantage of the method in accordance to the invention is that it is now possible to add Lactobacillus bacteria, in particular health active Lactobacillus bacteria to a food product of low water activity for example of less than 0.90, for example less than 0.85, for example from 0.80 to 0.50.

Therefore in another aspect the invention relates to a food product having a A_{w} of 0.90 or less, said food product comprising non-viable Lactobacillus bacteria and said food product being substantially non-fermented by said Lactobacillus bacteria.

As indicated above the inventions concerns the addition of Lactobacillus bacteria to food product whereby substantial fermentation by said Lactobacillus bacteria is to be avoided. In principle however it is still possible that the products of the invention comprise another fermentation source than the Lactobacillus, which are added in accordance to the invention. For example the food product of the invention may already be fermented before addition of the Lactobacillus in accordance to the invention, such as brined vegetables or a variety of indigenous foods. A preferred embodiment of the invention however concerns the application of the invention to non-fermented food products.

The method in accordance to the invention involves the addition of non-viable Lactobacillus bacteria to the food product. This may for example involve the mixing of the desired level of non-viable Lactobacillus bacteria into a finished food product e.g. it may be mixed into a sauce, margarine or drink after preparation thereof. Alternatively it may involve the combining of the non-viable Lactobacillus bacteria with one or more other ingredients of the product followed by further manufacturing steps to make the food product. For example in the process of making a bakery product the non-viable Lactobacillus bacteria may be added to the dough, followed by baking the dough in the oven to prepare the final product. In another example non-viable Lactobacillus bacteria may be added to a ice-premix followed by (optional) heat treatment and freezing.

In accordance to the invention lactic acid bacteria in viable form are added to the product followed by rendering the bacteria non-viable before substantial fermentation of the product takes place. For example viable Lactobacillus bacteria may be added to a fruitdrink having a pH of 3.0. The low pH of the drink will instantaneously render the Lactobacillus bacteria non-viable and no substantial fermentation of the drink will take place. In another embodiment viable Lactobacillus bacteria may be added to a sauce followed by a heat-treatment to render the Lactobacillus bacteria non-viable.

The present method of preparation involves the addition of a mixture of viable and non-viable Lactobacillus bacteria followed by rendering viable bacteria non-viable. This method has the particular advantage that a very cheap starting mix of viable and non-viable lactic acid bacteria can be used for example a Lactobacillus preparation as obtained via cell recycle fermentation. Production of such a mix, particularly a mix wherein the ratio of non-viable to viable bacteria is more than 5 :1, more preferred more than 10 : 1 up to 10,000 : 1, can very easily be done at reasonable costs.

The invention will now be further illustrated by the description of suitable embodiments of the preferred food products for use in the invention. It is believed to be well within the ability of the skilled person to use the teaching provided therewith to prepare other products of the invention.

### Margarines and other spreads

Typically these are oil in water or water in oil emulsions, also spreads which are substantially fat free are covered. Typically these products are spreadable and not pourable at the temperature of use e.g. 2-10 C. Fat levels may vary in a wide range e.g. full fat margarines with 60-90 wt% of fat, medium fat margarines with 30-60 wt% of fat, low fat products with 10-30 wt% of fat and very low or fat free margarines with 0 to 10 wt% of fat.

The fat in the margarine or other spread may be any edible fat, often used are soybean oil, rapeseed oil, sunflower oil and palm oil. Fats may be used as such or in modified form e.g. hydrogenated, esterified, refined etc. Other suitable oils are well known in the art and may be selected as desired.

The pH of a margarine or spread may advantageously be from 5.0 to 6.5.

Examples of spreads other than margarines are cheese spreads, sweet spreads, yogurt spreads etc.

Optional further ingredients of spreads may be emulsifiers, colourants, vitamins, preservatives, emulsifiers, gums, thickeners etc. The balance of the product will normally be water.

A typical size for an average serving of margarine or other spreads is 14 grams. Preferred Lactobacillus levels in the margarine or spread are 10⁶ and 10¹¹ per serving, more preferred these levels are from 10⁷ to 10¹⁰ per serving most preferred 10⁸ to 10¹⁰ per serving.

### Frozen Confectionery Products

For the purpose of the invention the term frozen confectionery product includes milk containing frozen confections such as ice-cream, frozen yoghurt, sherbet, sorbet, ice milk and frozen custard, water-ices, granitas and frozen fruit purees.

Preferably the level of solids in the frozen confection (e.g. sugar, fat, flavouring etc) is more than 3 wt%, more preferred from 10 to 70wt, for example 40 to 70 wt%.

Ice-cream will typically comprise 2 to 20 wt% of fat, 0 to 20 wt% of sweeteners, 2 to 20 wt% of non-fat milk components and optional components such as emulsifiers, stabilisers, preservatives, flavouring ingredients, vitamins, minerals, etc, the balance being water. Typically ice-cream will be aerated e.g. to an overrun of 20 to 400 %, more general 40 to 200 % and frozen to a temperature of from -2 to -200 C, more general -10 to -30 C. Ice-cream normally comprises calcium at a level of about 0.1 wt%.

A typical size of an average serving of frozen confectionery material is 66 grams. Preferred Lactobacillus levels are from 10⁶ and 10¹¹ per serving, more preferred these levels are from 10⁷ to 10¹⁰ per serving most preferred 10⁸ to 10⁹ per serving.

### Beverages, for example Tea Based Products or meal replacers

Lactobacillus can advantageously be used to beverages for example fruit juice, soft drinks etc. A very advantageous beverage in accordance to the invention is a tea based product or a meal replacers drink. These products will be described in more detail herein below. It will be apparent that similar levels and compositions apply to other beverages comprising vitamin Lactobacillus bacteria.

For the purpose of this invention the term tea based products refers to products containing tea or tea replacing herbal compositions e.g. tea-bags, leaf tea, herbal tea bags, herbal infusions, powdered tea, powdered herbal tea, ice-tea, ice herbal tea, carbonated ice tea, carbonated herbal infusions etc.

Typically some tea based products of the invention may need a preparation step shortly before consuming, e.g. the making of tea brew from tea-bags, leaf tea, herbal tea bags or herbal infusions or the solubilisation of powdered tea or powdered herbal tea. For these products it is preferred to adjust the level of Lactobacillus in the product such that one serving of the final product to be consumes has the desired levels of Lactobacillus as described above.

For ice-tea, ice herbal tea, carbonated ice tea, carbonated herbal infusions the typical size of one serving will be 200 ml or 200 grams.

Meal replacer drinks are typically based on a liquid base which may for example be thickened by means of gums or fibres and whereto a cocktails of minerals and vitamins are added. The drink can be flavoured to the desired taste e.g. fruit or choco flavour. A typical serving size may be 330 ml or 330 grammes.

Both for tea based beverages and for meal replacer drinks, preferred Lactobacillus levels are 10⁶ and 10¹¹ per serving, more preferred these levels are from 10⁷ to 10¹⁰ per serving most preferred 10⁸ to 10⁹ per serving.

For products which are extracted to obtain the final product, generally the aim is to ensure that one serving of 200 ml or 200 grams comprises the desired amounts as indicated above. In this context it should be appreciated than normally only part of the Lactobacillus present in the tea based product to be extracted will eventually be extracted into the final tea drink. To compensate for this effect generally it is desirable to incorporate into the products to be extracted about 2 times the amount as is desired to have in the extract.

For leaf tea or tea-bags typically 1-5 grams of tea would be used to prepare a single serving of 200 mls.

If tea-bags are used, the Lactobacillus may advantageously be incorporated into the tea component. However it will be appreciated that for some applications it may be advantageous to separate the Lactobacillus from the tea, for example by incorporating it into a separate compartment of the tea bag or applying it onto the tea-bag paper.

### Salad Dressings or Mayonnaise

Generally dressings or mayonnaise are oil in water emulsions, The oil phase of the emulsion generally is 0 to 80 wt% of the product. For non fat reduced products the level of fat is typically from 60 to 80%, for salad dressings the level of fat is generally 10- 60 wt%, more preferred 15-40 wt%, low or no fat dressings may for example contain triglyceride levels of 0, 5, 10, 15% by weight.

Dressings and mayonnaise are generally low pH products having a preferred pH of from 2-6.

Dressings or mayonnaise optionally may contain other ingredients such as emulsifiers (for example egg-yolk), stabilisers, acidifiers, biopolymers, bulking agents, flavours, colouring agents etc. The balance of the composition is water which could advantageously be present at a level of 0.1 to 99,9 wt%, more general 20-99 wt%, most preferred 50 to 98 wt%.

A typical size for an average serving of dressings or mayonnaise is 30 grams. Preferred levels of Lactobacillus in such products would be 10⁶ and 10¹¹ per serving, more preferred these levels are from 10⁷ to 10¹⁰ per serving most preferred 10⁸ to 10⁹ per serving.

### Meal replacer snacks or bars

These products often comprise a matrix of edible material wherein the Lactobacillus can be incorporated. For example the matrix may be fat based (e.g. couverture or chocolate) or may be based on bakery products (bread, dough, cookies etc) or may be based on agglomerated particles (rice, grain, nuts, raisins, fruit particles).

A typical size for a snack or meal replacement bar could be from 20 to 200 g, generally from 40 to 100 g. Preferred levels of Lactobacillus in such products would 10⁶ and 10¹¹ per serving, more preferred these levels are from 10⁷ to 10¹⁰ per serving most preferred 10⁸ to 10¹⁰ per serving.

Further ingredients may be added to the product such as flavouring materials, vitamins, minerals etc.

The invention will be further illustrated in the examples.

### Example

### Growing Lactobacillus strains and making them non-viable

A suitable medium like MRS (De Man et al. J. Applied Bacteriol. 23(1960)130-135), or an industrial equivalent, or skim milk, fortified with 0.35% yeast extract and 0.35% peptone, is inoculated with 0.5% of a Lactobacillus culture, that has been stored at -80°C as a full grown culture in skim milk, diluted with sterile 10% glycerol to an end volume of 6% glycerol. The culture is grown without stirring for 6 - 24 h at a temperature that is suitable for the specific strain (generally between 28°C and 43°C). This so-called pre-culture is used to inoculate a larger volume of a suitable industrial medium at a concentration of 0.1%. The cells are killed by pasteurization in batch (10 - 30 min. at 75°C) or in line (30 seconds 72°C), collected by centrifugation or filtration, and added to the products. If needed for the process, the cells can be spray-dried first on a suitable food-grade carrier such as whey or milk proteins.

Alternatively, a Lactobacillus strain is grown to very high cell densities in a Cell-Recycle Fermentor (Bibal et al., Biotech. and Bioeng. 37(1991)746-754) in which densities up to 80 g/l are obtained. A part of this cell mass consists of already killed cells, and the rest can be killed by the mild pasteurisation methods described.

Lactobacillus strains can also be grown on a large scale in a suitable food-grade medium, added directly to the product process and killed subsequently during the processing as described in the following examples.

### Example I

### Milkshake

100 mls of vanilla flavoured ice-cream is mixed with 100 ml of cooled milk, 10 ml of strawberry syrup. Lactobacillus GG (ATCC 53103) 10¹¹ bacteria in 10 grammes of water, was heat treated to render the bacteria non-viable, cooled and added' to the mix. The mixture is fed through a blender and immediately served.

### Example II

### Mayonnaise

100 mls of sunflower oil and 5 grammes of powdered egg yolk were gradually mixed with a mixture of 25 mls of vinegar (pH 3.0) and 10¹⁰ bacteria (Lactobacillus rhamnosus VTT, rendered non-viable by the low pH of the vinegar) to obtain a mayonnaise.

### Example III

### Tomato sauce

100 grammes of minced meat was cooked in a spoonful of olive oil, 200 grammes of tomato sauce was added as well as 10¹⁰ viable Lactobacillus bacteria (Lactobacillus casei strain DN-114001). The sauce was flavoured with salt and pepper and left to simmer for 10 minutes to cook the sauce and render the bacteria non-viable.

### Example IV

100 grammes of margarine (Flora UK) was mixed with a mixture of 10⁹ Lactobacillus bacteria (Lactobacillus casei strain Shirota), the bacteria had previously been dried to A_{w} 0.78 to render them non-viable.

## Claims

1. A method to produce a food product comprising non-viable Lactobacillus bacteria, wherein the method comprises the addition of a mixture of viable and non-viable Lactobacillus bacteria followed by rendering viable bacteria non-viable and wherein and wherein the ratio of non-viable to viable bacteria is more than 2 : 1, more preferred more than 5 : 1, most preferred more than 10 : 1, and further wherein the food product exhibits no more than 0.1 pH unit post-acidification.

2. A method according to claim 1, wherein the non-viable Lactobacillus bacteria are health active non-viable Lactobacillus bacteria.

3. Method according to either one of claims 1 or 2, wherein the method involves a heat-treatment step for preparation or preservation of the food product.

4. Method according to one or more of the preceding claims wherein the food product is selected from the group of meal replacers, soups, noodles, ice-cream, sauces, dressing, spreads, snacks, cereals, beverages, bread, biscuits, other bakery products, sweets, bars, chocolate, chewing gum, dairy products, dietetic products.

5. Method according to any one of the preceding claims, wherein the bacteria are rendered non-viable by heat treatment or by pH of the product.

## Patentansprüche

1. Verfahren zur Herstellung eines lebensunfähige Lactobacillus-Bakterien aufweisenden Nahrungsmittelprodukts, wobei das Verfahren das Zusetzen einer Mischung aus lebensfähigen und lebensunfähigen Lactobacillus-Bakterien, gefolgt vom Lebensunfähigmachen lebensfähiger Bakterien umfasst, und wobei das Verhältnis von lebensunfähigen zu lebensfähigen Bakterien mehr als 2:1, mehr bevorzugt mehr als 5:1, am meisten bevorzugt mehr als 10:1 ist, und worin weiters das Nahrungsmittelprodukt nicht mehr als 0,1 pH-Einheit Nachsäuerung aufweist.

2. Verfahren nach Anspruch 1, wobei die lebensunfähigen Lactobacillus-Bakterien für die Gesundheit wirksame, lebensunfähige Lactobacillus-Bakterien sind.

3. Verfahren nach einem der Ansprüche 1 oder 2, wobei das Verfahren einen Hitze-Behandlungs-Schritt zur Herstellung oder Konservierung des Nahrungsmittelprodukts beinhaltet.

4. Verfahren nach einem oder mehreren der vorhergehenden Ansprüche, wobei das Nahrungsmittelprodukt ausgewählt ist aus der Gruppe der Mahlzeit-Ersatzprodukte, Suppen, Nudeln, Eiscreme, Saucen, Dressing, Aufstriche, Snacks, Zerealien, Getränke, Brot, Biskuits, anderen Backwaren, Süßigkeiten, Riegel, Schokolade, Kaugummi, Milchprodukte, diätetischen Produkte.

5. Verfahren nach einem der vorhergehenden Ansprüche, wobei die Bakterien durch Hitze-Behandlung oder durch den pH-Wert des Produkts lebensunfähig gemacht werden.

## Revendications

1. Méthode de production d'un produit alimentaire comprenant des bactéries Lactobacillus non viables, où la méthode comprend l'adjonction d'un mélange de bactéries Lactobacillus viables et non viables, suivie d'une opération visant à rendre non viables les bactéries viables, et où le rapport entre bactéries non viables et bactéries viables est supérieur à 2 :1, plus préférentiellement supérieur à 5 :1, le plus préférentiellement supérieur à 10:1, et où en outre le produit alimentaire ne démontre pas plus de 0,1 unité de pH de post acidification.

2. Méthode selon la revendication 1, où les bactéries Lactobacillus non viables sont des bactéries Lactobacillus non viables qui ont un effet sur la santé.

3. Méthode selon l'une quelconque des revendications 1 ou 2, où la méthode implique une étape de traitement thermique dans la préparation ou la conservation du produit alimentaire.

4. Méthode selon une ou plusieurs des revendications précédentes, où le produit alimentaire est sélectionné dans le groupe des substituts de repas, soupes, nouilles, crèmes glacées, sauces, sauces pour salades, pâtes à tartiner, en-cas, céréales, boissons, pain, biscuits, autres produits de boulangerie, bonbons, confiseries, chocolat, chewing-gum, produits laitiers, produits diététiques.

5. Méthode selon l'une quelconque des revendications précédentes, où les bactéries sont rendues non viables par un traitement thermique ou par le pH du produit.
